# EUROPEAN PATENT APPLICATION

(11) **EP 4 624 601 A1**
(43) Date of publication of application: **01.10.2025**
(21) Application number: 23754695.7
(22) Date of filing: 15.05.2023
(51) Int. Cl.: C22B 3/00, C22B 3/06, C22B 9/02

(54) **METHOD FOR PROCESSING BY-PRODUCT OF HYDROMETALLURGICAL PROCESS OF ZINC WITH REDUCED CARBON EMISSION**

(30) Priority: 24.11.2022 KR 20220159206
(71) Applicant: Korea Zinc Co., Ltd., Seoul 06110 (KR)
(72) Inventor: CHOI, Heon Sik, Ulsan 44696 (KR); LEE, Hyun, Ulsan 44650 (KR)
(74) Representative: Angerhausen, Christoph
(86) International application number: PCT/KR2023/006543
(87) International publication number: WO 2023/243874

(57) **Abstract**

A method for processing a by-product of zinc hydrometallurgy, according to one embodiment of the present disclosure, includes a pressure leaching process of pressure leaching a lead/silver-containing by-product, which is generated in a finishing leaching process of zinc hydrometallurgy, by using an autoclave so that contents of zinc and iron contained in a leaching residue are less than 1 wt%, respectively.

## Description

### TECHNICAL FIELD

The present disclosure relates to a method for processing a by-product generated in zinc hydrometallurgical processes.

### BACKGROUND

Methods for extracting zinc from a zinc concentrate include a pyrometallurgical method and a hydrometallurgical method. Among these, the hydrometallurgical method refers to a method for extracting high-purity zinc from the zinc concentrate through roasting, leaching, solution purification, and final electrowinning processes.

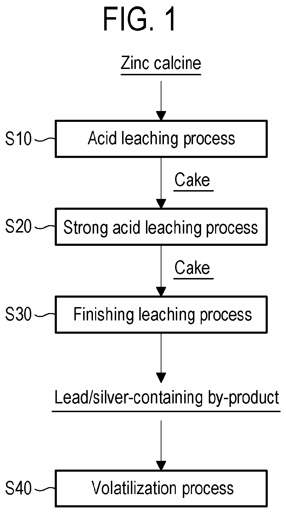

FIG. 1 illustrates a partial process flow diagram of conventional zinc hydrometallurgy.

Referring to FIG. 1, a lead/silver-containing by-product is generated through an acid leaching process S10 of leaching a zinc calcine having passed through a roasting process, a strong acid leaching process S20 of leaching a cake generated in the acid leaching process S 10 with a stronger acid, and a finishing leaching process S30 of finally leaching a cake generated in the strong acid leaching process S20. The lead/silver-containing by-product may be a by-product containing lead (Pb) and silver (Ag), and may be produced in the leaching processes of zinc hydrometallurgy as described above.

The lead/silver-containing by-product, generated in such zinc hydrometallurgy, contains zinc (Zn) by 5% and iron (Fe) by 10% in significantly large amounts, and is a raw material suitable for volatilization using a fumer than smelting in a smelter among pyrometallurgical processes. This is because a zinc ferrite (ZnO·Fe₂O₃) component in the lead/silver-containing by-product is not easily melted during processing in the smelter, causing operational instability. Accordingly, the lead/silver-containing by-product has conventionally been processed in a volatilization process S40 of volatilizing and recovering a metal using the fumer.

By the way, volatilization using the fumer enables the processing of the lead/silver-containing by-product having high contents of zinc (Zn) and iron (Fe), but typically has the disadvantage of having five times or higher carbon emissions per raw material, compared to smelting using the smelter, and a significantly lower recovery rate of valuable metals such as silver (Ag), gold (Au), and copper (Cu) compared to smelting using the smelter. Specifically, as shown in Table 1 below, about 1.38 tons of CO₂ is generated when processing 1 ton of the lead/silver-containing by-product using the fumer, whereas CO₂ emissions may be reduced to about 0.26 tons when processing the lead/silver-containing by-product using the smelter.

**[Table 1]**

| CO₂ Emissions Depending on Processing of Lead/Silver-Containing By-product | | |
|---|---|---|
| | Fumer | Smelter |
| CO₂ Emissions (tons) per 1 ton of Raw Material | 1.38 | 0.26 |

An object of the present disclosure is to provide a method for processing a lead/silver-containing by-product, which is a by-product generated in zinc hydrometallurgical processes, with a high recovery rate of valuable metals and low carbon emissions.

A method for processing a by-product of zinc hydrometallurgy according to the present disclosure includes a pressure leaching process of pressure leaching a lead/silver-containing by-product, which is generated in a finishing leaching process of zinc hydrometallurgy, by using an autoclave so that contents of zinc and iron contained in a leaching residue are less than 1 wt%, respectively.

According to one embodiment of the present disclosure, in the pressure leaching process, the lead/silver-containing by-product may be leached under pressure with a zinc spent leachate.

According to one embodiment of the present disclosure, the pressure leaching process may be performed so as to maintain a concentration of iron in a leachate at 10 to 12 g/L.

According to one embodiment of the present disclosure, an amount of a zinc spent leachate to be added may be adjusted according to the content of iron in the lead/silver-containing by-product so that the concentration of iron in the leachate is maintained at 10 to 12 g/L.

A method for processing a by-product of zinc hydrometallurgy, according to one embodiment of the present disclosure, includes a pressure leaching process of pressure leaching a lead/silver-containing by-product, which is generated in a finishing leaching process of zinc hydrometallurgy, by using an autoclave so that contents of zinc and iron contained in a leaching residue are less than 1 wt%, respectively, a separation process of separating a leachate and the leaching residue from the pressure leaching process into a liquid and a solid, and a smelting process of processing the leaching residue using a smelter.

According to one embodiment of the present disclosure, the leachate filtered in the separation process may be sent to a purification process of zinc hydrometallurgy.

According to the present disclosure, it is possible to reduce the amount of a lead/silver-containing by-product, which is a by-product generated in zinc hydrometallurgical processes, by pressure leaching the lead/silver-containing by-product. Specifically, the ratio of a leaching residue generated through the pressure leaching may be about 56% to 63% of input by-product, and accordingly, it is possible to reduce treatment costs for the by-product generated in the zinc hydrometallurgical processes.

Further, according to the present disclosure, the contents of zinc and iron contained in the leaching residue after the pressure leaching may be reduced to 1 wt% or less, respectively, which is a level that may be processed in a smelter. Accordingly, by smelting the leaching residue using the smelter after the pressure leaching, it is possible to increase the recovery rate of valuable metals and to reduce carbon emissions.

### BRIEF DESCRIPTION OF THE DRAWINGS

FIG. 1 is a partial process flow diagram of conventional zinc hydrometallurgy.
FIG. 2 is a process flow diagram of a method for processing a lead/silver-containing by-product according to the present disclosure.

### DETAILED DESCRIPTION

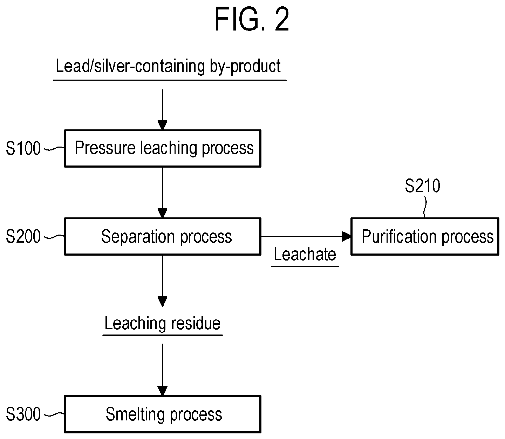

FIG. 2 is a process flow diagram of a method for processing a lead/silver-containing by-product according to the present disclosure.

Referring to FIG. 2, the method for processing a lead/silver-containing by-product according to the present disclosure includes a pressure leaching process S100, a separation process S200, and a smelting process S300.

A lead/silver-containing by-product, which is a raw material of the method for processing a lead/silver-containing by-product according to the present disclosure, is a by-product generated in zinc hydrometallurgical processes. For example, it may be a lead/silver-containing by-product generated as a by-product in the finishing leaching process S30 of FIG. 1.

### Pressure Leaching Process S100

In the pressure leaching process S100, a lead/silver-containing by-product is leached under pressure higher than atmospheric pressure using an autoclave. Specifically, in the pressure leaching process S100, zinc and iron in the lead/silver-containing by-product may be leached using the autoclave at a temperature of 130 degrees C or higher and a pressure of 3.7 bar or higher.

The pressure leaching process S100 may be performed for 1 to 2 hours. As will be described later along with experimental data, the leached iron may be re-precipitated if the pressure leaching process S100 is prolonged, thus a preferred reaction time may depend on the temperature and pressure. For example, the pressure leaching process S100 may be performed for 1 to 1.5 hours at a temperature of 130 degrees C or higher and less than 150 degrees C and a pressure of 3.7 to 4.0 bar, and may be performed for 1 to 2 hours at a temperature of 150 degrees C or higher and a pressure of 3.7 to 4.0 bar.

According to one embodiment, a solution for use in leaching in the pressure leaching process S100 may be a zinc spent leachate (or a zinc spend electrolyte) obtained after an electrowinning process of zinc hydrometallurgy. For example, a main component of the zinc spent leachate is sulfuric acid (H₂SO₄), and the concentration of sulfuric acid may be about 160 to 180 g/L. Alternately, according to another embodiment, a solution for use in leaching in the pressure leaching process S100 may be sulfuric acid having a concentration of about 160 to 180 g/L. A reaction equation related to leaching is shown in Equation (1) below.

ZnFe₂O₄ + 4H₂SO₄ → ZnSO₄ + Fe₂(SO₄)₃ + 4H₂O ... Eq. (1)

The ratio of the leaching residue after the pressure leaching process S100 (that is, the ratio of the leaching residue after the pressure leaching process to the input lead/silver-containing by-product as the raw material) may be about 56% to 63%. The contents of zinc (Zn) and iron (Fe) contained in the leaching residue are about 1 wt% or less, respectively. As will be described later along with experimental data, it is determined that jarosite and zinc ferrite in the lead/silver-containing by-product are leached, and accordingly the amount of the leaching residue and the contents of zinc and iron contained therein are reduced.

As described above, according to the present disclosure, the amount of the lead/silver-containing by-product is reduced through the pressure leaching process S100, so that it is possible to reduce subsequent treatment costs therefor.

Further, according to the present disclosure, the contents of zinc and iron contained in the leaching residue is reduced to 1 wt% or less, respectively, which is a level that may be processed in a smelter. Accordingly, by smelting the leaching residue after the pressure leaching using the smelter, it is possible to increase the recovery rate of valuable metals and to reduce carbon emissions.

A leachate in the pressure leaching process S100 contains zinc (Zn) and iron (Fe) leached from the lead/silver-containing by-product. The concentration of iron contained in the leachate may be about 10 to 12 g/L, and under this condition, the generation of jarosite may be suppressed, and the content of iron contained in the leaching residue may be reduced to 1 wt% or less.

### Separation Process S200

After the pressure leaching process S100, a separation process S200 of separating the leachate and the leaching residue into a solid and a liquid is performed.

The filtered leachate may be sent to a purification process S210 of a separate zinc hydrometallurgical process, and the leaching residue may be transferred to a smelting process S300.

### Smelting Process S300

A smelting process S300 is performed on the leaching residue generated in the separation process S200. In the smelting process S300, valuable metals such as zinc (Zn), copper (Cu), gold (Au), and silver (Ag) may be recovered from the leaching residue using a smelter.

In one embodiment, after the leaching residue is charged, together with a flux and a reducing material, into the smelter, it is melted and smelted at a temperature equal to or higher than the melting point thereof, whereby valuable metals such as zinc, copper, gold, and silver may be separated from impurities.

Hereinafter, the present disclosure will be described in detail with the use of experimental examples.

### [Experimental Example]

### [Examples 1 to 4 and Comparative Examples 1 and 2]

Main components of a lead/silver-containing by-product used in these experimental examples are lead and iron. Lead is mainly in the form of lead sulfate (PbSO₄). About 1.0% of the total 8.9% of iron is jarosite, and the remaining about 7.9% of iron is zinc ferrite.

Table 2 shows the contents of components in the lead/silver-containing by-product used in these experimental examples.

**[Table 2]**

| Content of Component in Lead/Silver-Containing By-product | | | | | |
|---|---|---|---|---|---|
| Element | Pb | Fe | Zn | Ag (g/t) | Au (g/t) |
| Content (wt%) | 14.3 | 8.9 | 5.0 | 1,146 | 7 |

The lead/silver-containing by-product was loaded into an autoclave, and the lead/silver-containing by-product was leached with a zinc spent leachate under pressure for 1.5 to 2.0 hours at a temperature of 130 to 150 degrees C and a pressure of 3.7 to 4.0 bar. The results are shown in Table 3.

**[Table 3]**

| Experimental Results of Pressure Leaching of Lead/Silver-Containing By-product (based on the density of iron in a leachate of about 11 g/L) | | | | | | |
|---|---|---|---|---|---|---|
| | Example 1 | Comparative Example 1 | Example 2 | Comparative Example 2 | Example 3 | Example 4 |
| Reaction Temperature (°C) | 130 | | 140 | | 150 | |
| Response Time (hr) | 1.5 | 2.0 | 1.5 | 2.0 | 1.5 | 2.0 |
| Fe in Residue (%) | 0.96 | 1.37 | 0.55 | 1.39 | 0.76 | 0.87 |
| Fe in Leachate (g/L) | 11.3 | 10.8 | 11.7 | 10.9 | 11.6 | 11.4 |
| Zn in Residue (%) | 0.98 | 1.64 | 0.46 | 1.22 | 0.43 | 0.64 |
| Ratio of Leaching Residue (%) | 63 | 64 | 60 | 61 | 56 | 58 |

As can be seen in Table 3, in Examples 1 to 4, the grades of iron and zinc in the leaching residue could be reduced to less than 1 wt%, and the ratio of the leaching residue to the input lead/silver-containing by-product was 56% to 63%. Further, during pressure leaching, the dissolved iron tended to re-precipitate as the reaction time increased from 1.5 hours to 2.0 hours.

On the other hand, Table 4 shows XRD measurement results of the leaching residue and the lead/silver-containing by-product as the raw material in Example 3 (leaching at 150 degrees C for 1.5 hours).

**[Table 4]**

| XRD Measurement Results (Peak Intensity) | | |
|---|---|---|
| | Lead/Silver-Containing By-product as Raw Material | Leaching Residue of Example 3 |
| K/Na-Jarosite | ○ | X |
| Zinc Ferrite | ○ | X |
| PbSO₄ | ⊚ | ⊚ |
| CaSO₄ | Δ | ○ |
| SiO₂ | X | Δ |

| | | |
|---|---|---|
| * very strong (⊚), strong (○), weak (△), not detected (X) | | |

Referring to Table 4, it can be seen that the XRD peaks of jarosite and zinc ferrite in the leaching residue were greatly reduced compared to the lead/silver-containing by-product as the raw material. Thus, the reason for a reduction in the leaching residue is determined because jarosite and zinc ferrite in the lead/silver-containing by-product as the raw material were dissolved during the pressure leaching process.

### [Example 5 and Comparative Examples 3 to 5]

In these experimental examples, the concentrations of iron and zinc in the leaching residue were measured while changing the concentration of iron in the leachate through solid density control in the pressure leaching process. In these experimental examples, the pressure leaching process was performed for 1.5 hours at a temperature of 150 degrees C and a pressure of 3.7 to 4.0 bar, and the content of iron contained in the lead/silver-containing by-product as the raw material was about 13 wt%.

**[Table 5]**

| Experimental Results of Pressure Leaching of Lead/Silver-Containing By-product for Each Concentration of Iron in Leachate | | | | |
|---|---|---|---|---|
| Experimental Conditions (150°C, 1.5 hr) | Based on 13% Iron Grade (Lead/Silver-Containing By-product as Raw Material) | | | |
| | Example 5 | Comparative Example 3 | Comparative Example 4 | Comparative Example 5 |
| Solid Density | 80 g/L | 100 g/L | 120 g/L | 150 g/L |
| Fe in Leachate (g/L) | 10.0 | 12.1 | 13.4 | 14.8 |
| Fe in Residue (%) | 0.84 | 1.50 | 3.12 | 5.29 |
| Zn in Residue (%) | 0.41 | 0.54 | 0.67 | 0.75 |

Referring to Table 5, since jarosite is not formed if the concentration of iron in the leachate is 10 to 12 g/L during pressure leaching, it is determined that the grade of iron in the residue may be maintained at less than 1 wt%. Therefore, it is determined that the concentration of iron in the leachate needs to be maintained at 10 to 12 g/L during pressure leaching, in order to generate the leaching residue to be smelted in the smelter.

In this regard, it is necessary to adjust the solid density according to the iron content because the concentration of iron in the leachate may be increased if the iron content in the lead/silver-containing by-product as the raw material is high. For example, it is necessary to maintain the concentration of iron in the leachate at 10 to 12 g/L by increasing the amount of a zinc spent leachate added for pressure leaching if the iron content in the lead/silver-containing by-product as the raw material is high, or by reducing the amount of a zinc spent leachate added for pressure leaching if the iron content in the lead/silver-containing by-product as the raw material is low.

### [Comparative Examples 6 to 9]

In these experimental examples, the results of leaching a lead/silver-containing by-product under the atmospheric pressure (1 bar) with a zinc spent leachate at a reaction temperature of 95 degrees C for 12 hours and at different solid densities are shown in Table 5.

**[Table 6]**

| Experimental Results of Atmospheric Pressure Leaching | | | | |
|---|---|---|---|---|
| Experimental Conditions (95°C, 12 hr) | Based on 13% Iron Grade (Lead/Silver-Containing By-product as Raw Material) | | | |
| | Comparative Example 6 | Comparative Example 7 | Comparative Example 8 | Comparative Example 9 |
| Solid Density | 80 g/L | 100 g/L | 120 g/L | 150 g/L |
| Fe in Residue (%) | 1.43 | 2.31 | 3.72 | 4.89 |
| Zn in Residue (%) | 1.27 | 1.94 | 2.08 | 3.38 |

As can be seen from Table 6, it failed to lower the grade of iron and zinc in the leaching residue to 1 wt% or less by the atmospheric leaching, and a requirement for processing the leaching residue in the smelter was not satisfied.

As described above, according to the present disclosure, by adjusting the process temperature, the process time, and the concentration of iron in the leachate while leaching the lead/silver-containing by-product with the autoclave, the contents of iron and zinc in the leaching residue could be reduced to less than 1 wt%, respectively. Thereby the leaching residue which is processible in the smelter could be obtained. Accordingly, the recovery rate of valuable metals could be increased (Zn 83%→85%, Cu 70→95%, Ag 95%→99.8%, Au 85%→98.5%), and carbon emissions could also be reduced.

Further, according to the present disclosure, the resulting by-product, which needs to be subsequently processed, could be reduced by pressure leaching using the autoclave, and accordingly, treatment costs of the by-product could be reduced.

Although the embodiments of the present disclosure have been described with reference to the accompanying drawings, those skilled in the art to which the present disclosure pertains can understand that the present disclosure may be implemented in other specific forms without changing the technical scope or essential features of the present disclosure.

Therefore, the embodiments described above should be understood as illustrative in all respects and not limiting. The scope of the present disclosure is indicated by the appended claims rather than the detailed description, and all changes or modifications derived from the meaning and scope of the claims and equivalent concepts thereof should be construed as being included in the scope of the present disclosure.

## Claims

1. A method for processing a by-product of zinc hydrometallurgy, the method comprising a pressure leaching process of pressure leaching a lead/silver-containing by-product, which is generated in a finishing leaching process of zinc hydrometallurgy, by using an autoclave so that contents of zinc and iron contained in a leaching residue are less than 1 wt%, respectively.

2. The method of claim 1, wherein in the pressure leaching process, the lead/silver-containing by-product is leached with a zinc spent leachate under pressure.

3. The method of claim 1, wherein the pressure leaching process is performed so as to maintain a concentration of iron in a leachate at 10 to 12 g/L.

4. The method of claim 3, wherein an amount of a zinc spent leachate to be added is adjusted according to the content of iron in the lead/silver-containing by-product so that the concentration of iron in the leachate is maintained at 10 to 12 g/L.

5. A method for processing a by-product of zinc hydrometallurgy, the method comprising:
a pressure leaching process of pressure leaching a lead/silver-containing by-product, which is generated in a finishing leaching process of zinc hydrometallurgy, by using an autoclave so that contents of zinc and iron contained in a leaching residue are less than 1 wt%, respectively;
a separation process of separating a leachate and the leaching residue from the pressure leaching process into a liquid and a solid; and
a smelting process of processing the leaching residue using a smelter.

6. The method of claim 5, wherein the leachate filtered in the separation process is sent to a purification process of zinc hydrometallurgy.
